# EUROPEAN PATENT APPLICATION

(11) **EP 4 723 581 A1**
(43) Date of publication of application: **08.04.2026**
(21) Application number: 25183884.3
(22) Date of filing: 19.06.2025
(51) Int. Cl.: H04L 45/02, H04L 45/12, H04L 45/00, H04L 45/28

(54) **ROUTE DISCOVERY IN PROGRAMMABLE NETWORKS**

(30) Priority: 24.06.2024 US 202463663276 P; 18.06.2025 US 202519241644
(71) Applicant: Schweitzer Engineering Laboratories, Inc., Pullman, WA 99163 (US)
(72) Inventor: Mullis, Tristan, Pullman, 99163 (US)
(74) Representative: Smith, Jeremy Robert

(57) **Abstract**

Systems and methods for determining primary and failover paths in a programmable communication network are disclosed herein. In one embodiment, a system to identify a plurality of communication paths may operate in conjunction with a programmable communication network connecting a source and a destination. A path discovery subsystem may discover both a first and a second completed communication path between the source and the destination. A cost calculation subsystem may calculate a first cost for the first completed communication path and a second cost for the second completed communication path. A routing subsystem may identify a primary communication path based on the first cost and the second cost, and program the plurality of nodes to implement the primary communication path.

## Description

### RELATED APPLICATIONS

This application claims priority to U.S. Non-Provisional Patent Application No. 19/241,644, titled ROUTE DISCOVERY IN PROGRAMMABLE NETWORKS, filed on June 18, 2025, which claims priority to Provisional Patent Application No. 63/663,276, titled LARGE SCALE FAILOVER ROUTE DISCOVERY FOR PROGRAMMABLE NETWORKS, filed on June 24, 2024.

### TECHNICAL FIELD

This disclosure relates to failover planning in a programmable communications network. In particular, this disclosure relates to the calculation of multiple failover paths and the selection of the best failover path.

### BRIEF DESCRIPTION OF THE DRAWINGS

Non-limiting and non-exhaustive embodiments of the disclosure are described, including various embodiments of the disclosure with reference to the figures, in which:
**Figure 1** illustrates a programmable network that includes a source and a destination connected by a plurality of switches and consistent with embodiments of the present disclosure.
**Figure 2** illustrates a communication network comprising a source, a destination, and a plurality of switches arranged in an 8-by-8 grid, and consistent with embodiments of the present disclosure.
**Figure 3** illustrates a flowchart of a method for route discovery in a programmable network consistent with embodiments of the present disclosure.
**Figure 4A** illustrates a simplified block diagram of a programmable communications network comprising a plurality of programmable switches in a mesh configuration and consistent with embodiments of the present disclosure.
**Figure 4B** illustrates an alternative communication network comprising a plurality of programmable switches and consistent with embodiments of the present disclosure.
**Figure 5** illustrates a block diagram of a system to identify a plurality of communication paths in a programmable communication network consistent with embodiments of the present disclosure.

### DETAILED DESCRIPTION

The difficulty in routing traffic in a network increases exponentially as the number of nodes in the network increases. In large networks, a large number of paths may exist between two nodes, and identifying the optimal path among the possible paths is a challenging task. This challenge is particularly acute in a failover scenario in which a network connection fails. In a failover scenario, a new route must be determined. In some instances, a failover path may be pre-determined; however, other approaches involve dynamically determining a failover path.

In relatively small networks, all failover options may be exhaustively determined, and an optimal path may be selected. In some embodiments, the optimal path may be determined using a "cost" approach. In such embodiments, the "cost" of a given path may be the sum of each network link in the path and may account for various metrics, such as data throughput of a link, link availability, link reliability, etc. The path with the lowest "cost" may be selected. High-reliability networks may employ advanced failover planning. Such networks may include several options for primary paths and many more failover path options. This becomes challenging to optimize as the cost of failover paths much be calculated with respect to their starting failover ports so that overlapping failover paths that use the same switches cannot interfere with each other.

Systems and methods consistent with the present disclosure may improve advanced failover planning in large networks. The systems and methods of the present disclosure may be applied to high-reliability networks, such as those used in critical infrastructure (e.g., electric power systems, communication systems, etc.). In various embodiments, strategies may be used to reduce the number of failover paths that are calculated. Reducing the number of paths calculated reduces both the processing burden and the memory requirements.

Various embodiments may be utilized in software-defined networks ("SDN"). In an SDN, the shortest path option for failover may not always be the best option, so it is necessary to compute several failover paths to determine which potential failover path should be used. One example of this is reconverging with the primary traffic path as soon as possible to provide a more robust failover solution. Reconvergence offers a more robust solution because once the traffic is back on the primary path an additional failover paths can be used..

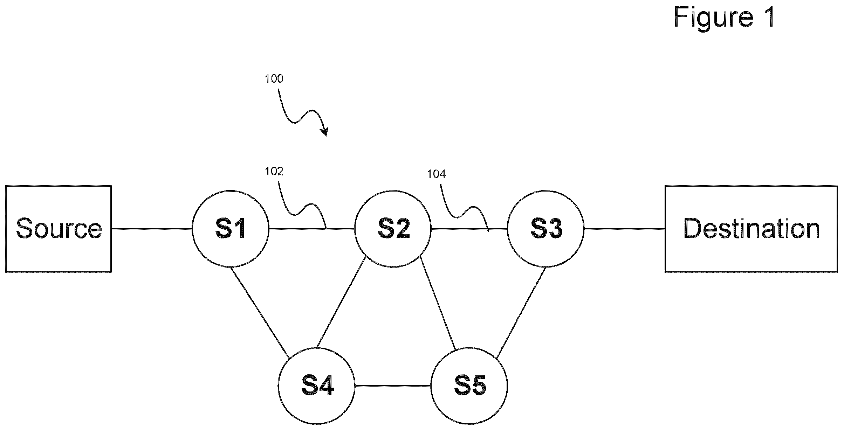

**Figure 1** illustrates a programmable network 100 that includes a source and a destination connected by a plurality of switches (S1-S5) and consistent with embodiments of the present disclosure. Physical connections between the elements in network 100 are shown with lines. The primary route for traffic between the Source and the Destination is:
Source → S1 → S2 → S3 → Destination
In the event of a failure of physical link 102 between S1 and S2, there are two options:
Path 1: Source → S1 + S4 → S5 → S3 + Destination
Path 2: Source → S1 + S4 → S2 → S3 + Destination
Path (2) is preferred as it reconverges with the primary path, which results in more robust failover. The system may determine multiple failover paths, and in various embodiments may utilize portions of any given failover path and portions of primary path unaffected by a failover.

As may be observed, each switch is connected to at least two other switches. These connections offer increased reliability because multiple physical links between switches can fail while maintaining communication between the source and the destination. For example, physical link 104, which is disposed between S2 and S3, may also fail in addition to physical link 102 without interrupting communication. The failover path in this scenario is:
Source → S1 → S4 → S2 →S5 → S3 → Destination
The additional failover options provide greater flexibility and resilience, but as the network grows in complexity, the number of potential failover paths increases exponentially. The exponential increase in the number of potential failover paths results in an exponential increase in the computational burden associated with exhaustively determining and evaluating each path.

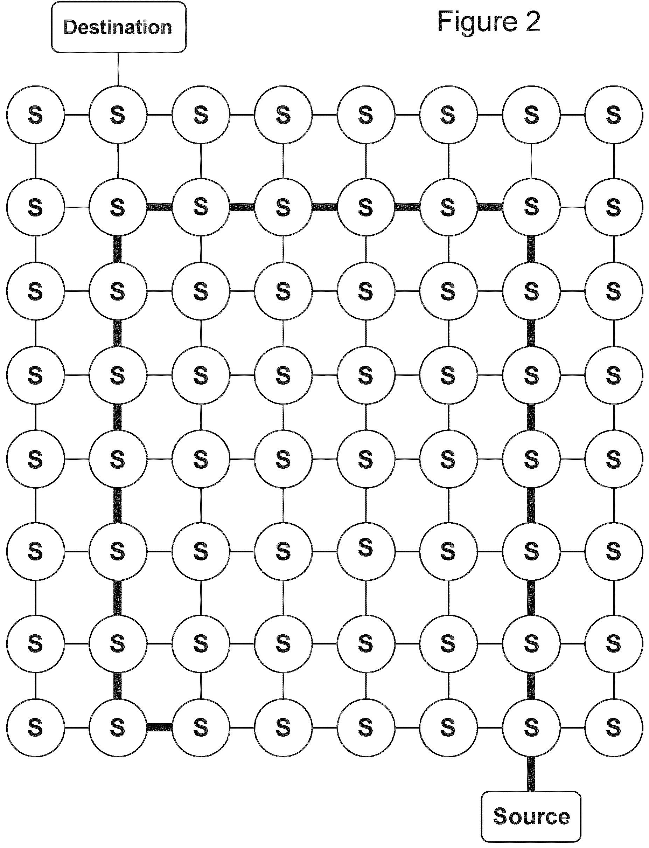

**Figure 2** illustrates a communication network 200 comprising a source, a destination, and a plurality of switches arranged in an 8-by-8 grid and consistent with the present disclosure. An SDN flow controller, such as the SEL-5056 available from Schweitzer Engineering Laboratories of Pullman, Washington, may generate a prefix tree to represent the network 200. In some embodiments, the prefix tree may be generated using a depth-first search; however, such a strategy is not guaranteed to identify an optimal solution.

**Figure 2** illustrates one potential path through network 200 that may be identified during a depth-first search. The identified path in **Figure 2****,** for example, is not optimal; however, many additional levels would need to be analyzed in a depth-first search to complete the exploration of the path, and before proceeding to analyze a new path. Exhaustively exploring all possible paths between the Source and the Destination would lead to an unreasonable computational burden and may ultimately fail to yield an optimal solution.

Embodiments consistent with the present disclosure may rely on a modular system to discover and implement communication paths. The modular system may facilitate the use of extensions that provide feedback and additional functions to improve the efficiency of the planning system. Such feedback and additional functions may help to avoid a scenario like the one illustrated in **Figure 2****.**

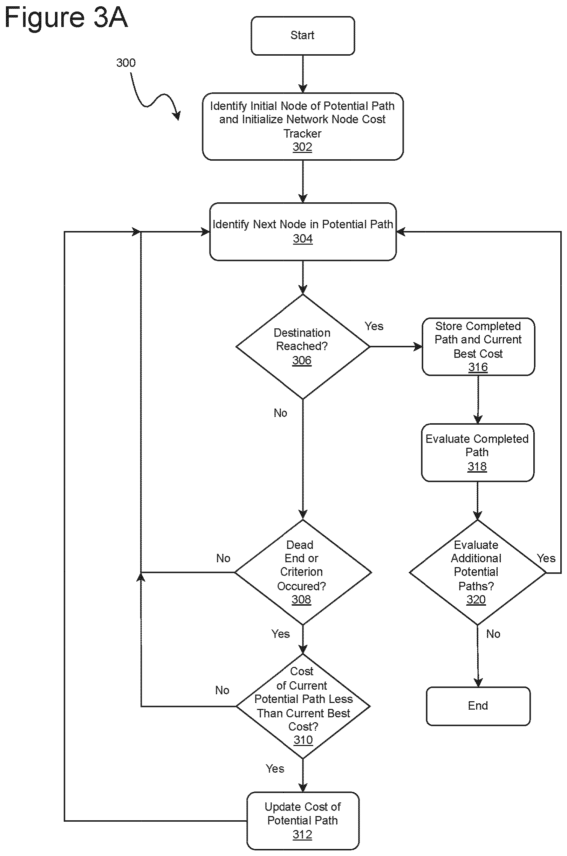

**Figure 3A** illustrates a flowchart of a method 300 for discovery of a primary path in a programmable network consistent with embodiments of the present disclosure. At 302, an initial node of a potential path may be identified, and a network node cost tracker may be initialized. In various embodiments, the initial node may be connected to a source, and method 300 may determine a primary route from the source to a destination. Of course, in other embodiments, the initial node may be connected to the destination, and a route may be generated back to the source.

At 304, the next node in a potential path may be identified. A multicast network discovery scheme may be utilized in some embodiments. A unicast network discovery scheme may be used in other embodiments. In various embodiments, a cost-tracking approach may be used for each port of a node. Such embodiments may allow discovering multiple shortest path options from the source device when advanced selection of multicast primary path is utilized. Unicast path finding to a single destination may use a single node cost tracker, but will also work as described here. The next node may be identified in connection with a depth-first search that proceeds as discussed below.

At 306, method 300 may determine if a destination has been reached. Although it may be unlikely to occur during a first iteration, multiple iterations of elements 304-310 may lead to identification of a path between the source and destination. Once the destination is reached, the completed path and the associated cost of the past may be stored at 316. The cost of a completed path may be evaluated at 318. In some embodiments, efficient paths (i.e., paths with a low cost) may be used for primary paths for communication between the source and destination, while less efficient paths may be used as failover paths.

If the destination is not reached at 306, method 300 may next determine if the path has reached a dead end or a criterion established by an extension has occurred at 308. A dead end may represent a node that does not connect to other nodes or the destination. As such, further examination cannot lead to the discovery of a communication path.

Extensions may utilize various criteria to constrain a search. For example, an operator may specify a maximum depth to search or a maximum time to search a potential path as criteria. Reaching a considerable depth or spending considerable time on a potential path may be an indication that the path is unlikely to result in a complete path between the source and destination. Such criteria may be beneficial in identifying a first path, as there may not be a cost associated with a complete path between the source and destination. Of course, criteria may also be used in connection with additional potential paths.

At 310, the cost of the current potent path may be compared to the cost of the current best cost. Comparing the cost of a path under analysis to a completed path with an established cost may reduce the resources devoted to less efficient potential paths. Accordingly, if the cost of the current potential path is less than the current best cost, it is beneficial to continue analyzing the path, and method 300 may proceed to identify the next node in the potential path at 304. On the other hand, If the cost is greater than the current best cost at 310, analysis of the potential path may be discontinued because it is more costly than a known completed path. The cost of the potential path may be updated at 312, and method 300 may return to 304.

Method 300 may identify multiple completed paths between the source and the destination, along with the costs of each path. Each completed path and associated cost may be stored at 316. A system implementing method 300 may evaluate additional potentials at 320. Exploring additional potential paths may identify more efficient paths or offer additional failover paths. Once an adequate number of completed paths have been identified, method 300 may end.

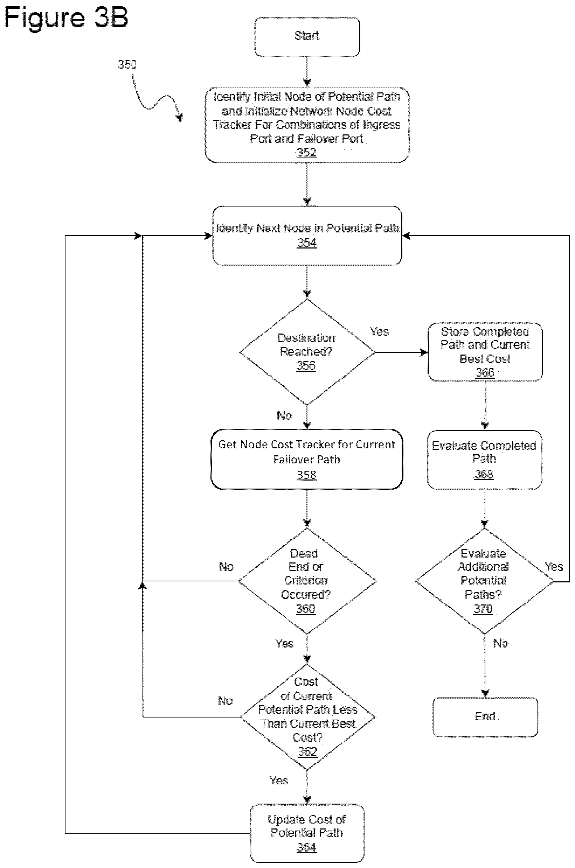

**Figure 3B** illustrates a flowchart of a method 350 for discovery of a failover path in a programmable network consistent with embodiments of the present disclosure. At 352, an initial node of a potential path may be identified, and a network node cost tracker may be initialized for combinations of failover port with their respective ingress port. In various embodiments, the initial node may be any node along a primary path. Various embodiments may prioritize analysis of nodes along a primary path to increase the efficiency of finding potential failover paths. Of course, in other embodiments, node outside of the primary path may also be analyzed in connection with potential failover paths.

At 354, the next node in a potential path may be identified. Identification of a next potential node may be cased on the combination of the ingress port and the failover port identified at 352.

At 356, method 350 may determine if a destination has been reached. Once the destination is reached, the completed path and the associated cost of the past may be stored at 366. The cost of a completed path may be evaluated at 368. Lower-cost failover paths may be preferred to higher-cost failover paths.

At 358, method 300 may get the node cost tracker for the current failover path. Starting from the end of the path each pair of node ingress port id and node egress port id is looked up in the tracking system initialized in 352. This continues in reverse down the path until a node cost tracker is identified. If no cost tracker is identified, then the depth first search is still on the primary path and node cost tracking does not apply yet as the base primary path must not be pruned. This also means no node costs need updated as the cost of primary path nodes are not tracked. For the case of no cost tracker cost will not apply to the criteria in 360.

Method 350 may next determine if the path has reached a dead end or a criterion established by an extension has occurred at 360. If a dead end or criterion has been reached, analysis of the potential path may be discontinued. Ending the analysis of such paths, which may also be referred to as pruning" such paths, may dramatically reduce the number of potential paths to be analyzed.

At 362, the cost of the current potent path may be compared to the cost of the current best cost from the cost tracker from 358. Comparing the cost of a path under analysis to a previously established cost may reduce the resources devoted to less efficient potential paths by allowing the depth first search to complete early. Accordingly, if the cost of the current potential path is less than the current best cost, it is beneficial to continue analyzing the path, and method 350 may proceed to identify the next node in the potential path at 354. On the other hand, if the cost is greater than the current best cost at 310, analysis of the potential path may be discontinued because it is more costly than a known completed path. The cost of the potential path may be updated at 364, and method 350 may return to 354.

Method 350 may identify multiple paths between the source and the destination, along with the costs of each path. Each completed path and associated cost may be stored at 316. A system implementing method 350 may evaluate additional potential failover paths at 370. Exploring additional potential failover paths may identify more efficient paths or alternative failover paths. Once an adequate number of completed paths have been identified, method 350 may end.

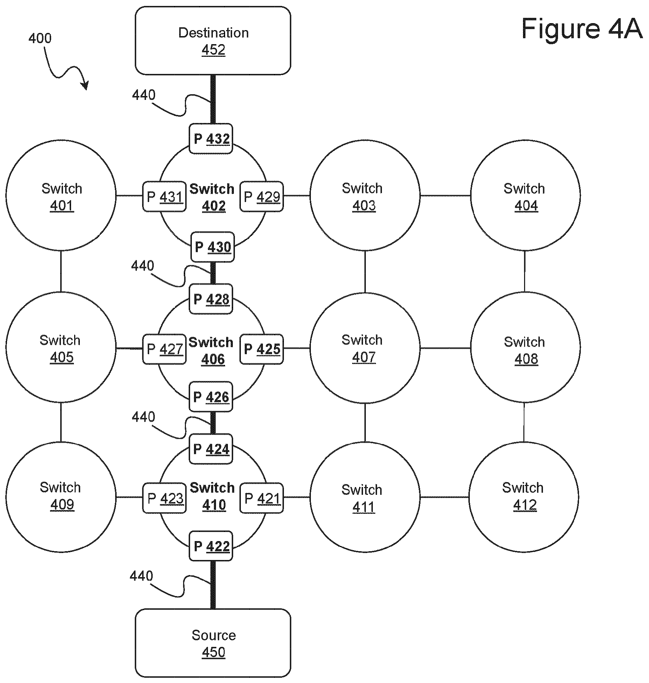

**Figure 4A** illustrates a simplified block diagram of a programmable communications network 400 comprising a plurality of programmable switches 401-412 in a mesh configuration and consistent with embodiments of the present disclosure. Programmable communication network 400 comprises a plurality of nodes that connect a source 450 to destination 452. Each node is embodied as a switch with a plurality of individually programmable ports 421-432. Switches 401-412 are connected in a mesh configuration. In the illustrated embodiment, each switch connects to each adjacent switch.

An initial step in the configuration of programmable communication network 400 comprises the discovery of a communication path between source 450 and destination 452. A node cost tracker may track a cost of each communication path as the path is discovered. In various embodiments, the cost of a particular communication path may be determined for independently programmable ports.

Programmable communication network 400 may incorporate a depth-first search strategy that may begin with switch 410 (i.e., the switch connected to source 450). From there, each node may be explored until a potential path either reaches destination 452 or reaches a dead end. A dead end, for example, may consist of the path switch 410 → switch 406 → switch 405 → switch 409. This path is a dead end because at switch 409, the only option is to return to a node that has already part of the path (*i.e.,* switch 410 or switch 405).

While exploring a potential path from source 450 to destination 452, an associated cost may be tracked. For every new prefix tree node created by the depth first search this extension verifies that the current node cost is less than or equal to the current record best node cost. If this check fails, then analysis of the current potential path may stop so the depth-first search can continue on another potential path.

Once a completed path 440 is identified between source 450 and destination 452 (*i.e.,* switch 410 → switch 406 → switch 402) an associated cost may be stored. The cost of communication path 440 may be stored as a current best cost and may be used as a point of comparison to other potential communication paths. For example, a potential communication path may be switch 410 → switch 409 → switch 405 → switch 401 → switch 402. This path passes through 5 nodes, and as such, it may be expected to have a higher cost than completed path 440. Of course, the actual cost is influenced by various factors, and this example is provided for illustrative purposes.

After identifying potential paths between source 450 and destination 452, a primary communication path may be selected. The primary communication path may be selected based on an evaluation of the costs associated with the potential paths. Generally, the path with the lowest cost is chosen as the primary communication path.

In addition to discovering primary communication paths, failover communication paths may also be discovered. In some embodiments, the primary communication path (i.e., communication path 440) may be used to create a failover path. In one specific embodiment, each possible failover output port on the primary path may be analyzed to identify a potential failover communication path.

In the configuration illustrated in **Figure 4A****,** ports 421-432 are the set of possible failover ports on the primary path. In various embodiments, the ports on the primary path may be analyzed to discover a failover path. For example, a failure on the link between ports 424 and 426 may cause programmable communication network 400 to route traffic between source 450 and destination 452. A failover path may utilize port 423 to communicate to switch 409, which in turn communicates to switch 405. The information may be communicated from switch 405 to switch 406, and the remainder of the primary communication path may be utilized. In various embodiments, the same cost-tracking strategies may be used for failover path discovery. Failover path discovery may occur during commissioning and during operation. Ongoing discovery during operation may allow for adaptation to changes in network conditions (e.g., temporary or permanent link failures, connectivity changes, etc.)

Extensions may be utilized in various embodiments to improve the ability of programmable communication network 400 to identify primary or failover communication paths. One extension may exclude output ports that are not attached to programmable or traditional network switching devices from failover analysis. That is, if a port is only attached to an endpoint device, there is no failover to be discovered.

In various embodiments, costs may be traded on a node-by-node basis, a port-by-port basis, or both. For the failover case, if node cost is tracked for all failover ports, then path finding may prune failover paths it should not. That "key" creation part is about that costs for the switch nodes are mapped to those keys. During the path discovery this enables the current path being explored to find the correct set of node costs to use to determine if it should stop searching or not.

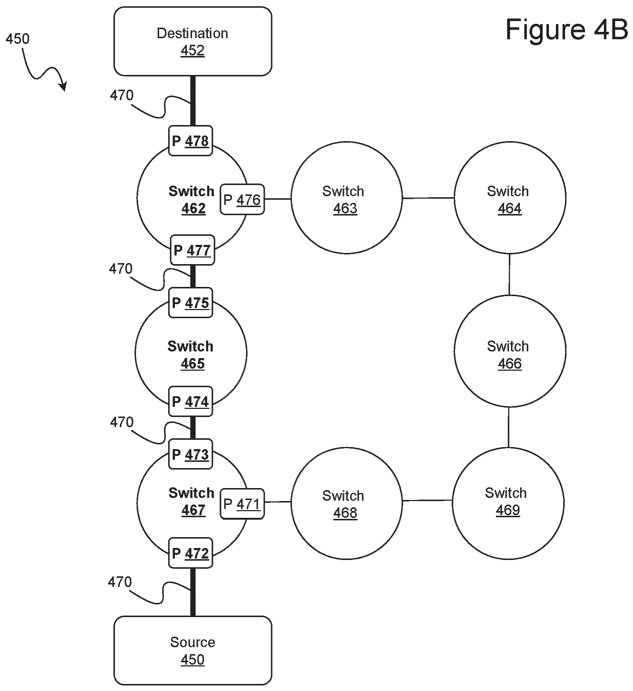

**Figure 4B** illustrates an alternate communication network 450 comprising a plurality of programmable switches 462-469 in a ring configuration and consistent with embodiments of the present disclosure. A primary path 470 between source 450 and destination 452 is illustrated. Pairs of ingress and failover ports may be identified based on the primary communication path 470. The ingress failover port pairs are P472 + P471 and P474 + P474. These port pairs will have independent cost tracking. Ports P477 + P476 could be considered a port pair; however, this port pair would not yield any useful results. Ports P472+P473, P474+P475, and P477+P478 are primary port pairs, which do not have independent cost trackers, and as such, they are not paired with a failover port.

First, with regard to P472+P471, a path will be discovered from source 450, switch 457 and switch 458. For simplicity, the cost may equal the number of hops in this example. As such, the hop cost is 2 to go from source 450 to switch 468. This cost may be stored and associated with the failover port pair P472+P471.

Likewise, a path exists for the port pair P474+P474; however, this path involves traffic entering and exiting on the same port. Traffic may go from source 450 → switch 467 → switch 465 → switch 467 → switch 468. The cost for this path is 4. If the cost from the perspective of port pair P477+P478 was compared to the cost from P474+474, then a failover for switch 465 could not be discovered. This is problematic because traffic would be dropped if the connection between P475 and P477 failed. Due to the costs being independently stored, however, the cost of P424+P424 cost tracking is able to find its own minimum cost to reach switch 468 and discover a failover route that will eventually reach destination 452.

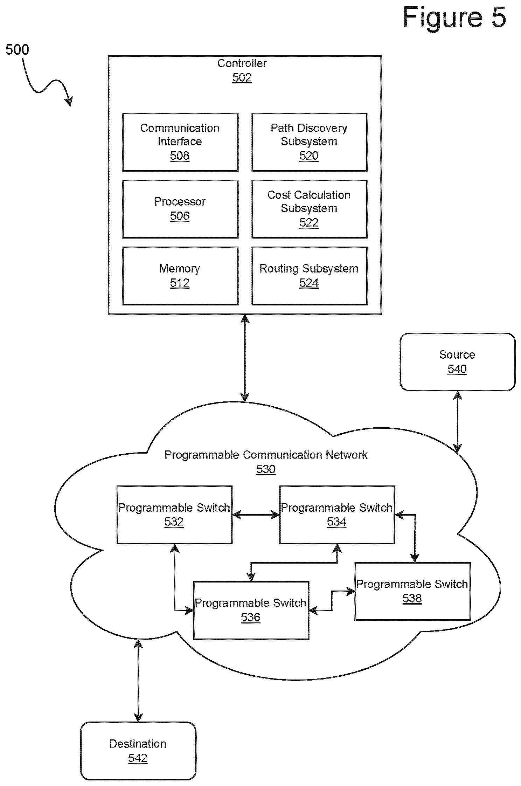

**Figure 5** illustrates a block diagram of a system 500 to identify a plurality of communication paths between a source 540 and a destination 542 in a programmable communication network 530 consistent with embodiments of the present disclosure. In some embodiments, system 500 may be embodied as an SDN controller. A controller 502 may be in communication with programmable communication network 530. In some embodiments, controller 502 may be embodied as an SDN controller, and programmable communication network 530 may be embodied as an SDN data plane. Controller 502 may discover and establish communication flows to route traffic from source 540 through programmable communication network 530 to destination 542.

Programmable communication network 530 comprises a plurality of programmable switches 532-538. Each of programmable switches 532-538 may include independently programmable ports that are in communication with other programmable switches in programmable communication network 530.

Controller 502 includes a communication interface 508 to communicate with programmable communication network 530. Communication interface 308 may facilitate communications with multiple devices and comprise more than one physical interface. Communication interface 508 may be used to program programmable switches 532-538 to route traffic between source 540 and destination 542.

Processor 506 may be configured to implement instructions related to the systems and methods described herein. Processor 506 may process communications received via communication interface 508 and may coordinate the operation of the other components of controller 502. Processor 506 may operate using any number of processing rates and architectures. Processor 506 may be configured to perform any of the algorithms and calculations described herein. Processor 506 may be embodied as a general-purpose integrated circuit, an application-specific integrated circuit, a field-programmable gate array, and/or any other suitable programmable logic device.

Memory 512 may store instructions to be executed by processor 506. Memory 512 may comprise random access memory (RAM) and non-volatile storage. Instructions stored in memory 512 may include the processes and algorithms disclosed herein related to routing and processing data packets with programmable communication network 530.

A path discovery subsystem 520 may discover a plurality of paths between source 540 and destination 542 in programmable communication network 530. In one embodiment, path discovery subsystem 520 may implement the portions of method 300 illustrated in **Figure 3** related to path discovery. Path discovery subsystem 520 may be operable to discover the plurality of paths without user intervention.

A cost calculation subsystem 522 may be configured to determine the cost of a plurality of paths identified by path discovery subsystem 520. Cost calculation subsystem 522 may calculate a cost for each path between source 540 and destination 542.

A routing subsystem 524 may utilize the paths identified by path discovery subsystem 520 and the costs identified by cost calculation subsystem 522 to determine a primary communication path between source 540 and destination 542. Generally, a path with a lower cost is selected as the primary communication path over an alternate path with a higher cost. Routing subsystem 524 may also identify one or more failover paths between source 540 and destination 542. Failover paths may also be assessed using a cost determined by cost calculation subsystem 522. Again, paths with lower costs may be preferred as failover paths compared to those with higher costs. Routing subsystem 524 may determine a primary communication path and one or more failover paths without user intervention.

While specific embodiments and applications of the disclosure have been illustrated and described, it is to be understood that the disclosure is not limited to the precise configurations and components disclosed herein. Accordingly, many changes may be made to the details of the above-described embodiments without departing from the underlying principles of this disclosure. The scope of the present invention should, therefore, be determined only by the following claims.

## Claims

1. A system to identify a plurality of communication paths in a programmable communication network comprising a plurality of nodes and connecting a source and a destination, the system comprising:
a path discovery subsystem to:
discover a first completed communication path in the programmable communication network between the source and the destination; and
discover a second completed communication path between the source and the destination;
a cost calculation subsystem to:
calculate a first cost for the first completed communication path between the source and the destination; and
calculate a second cost for the second completed communication path between the source and the destination; and
a routing subsystem to:
identify a primary communication path based on the first cost and the second cost; and
program the plurality of nodes to implement the primary communication path.

2. The system of claim 1, wherein the routing subsystem is further configured to identify the second completed communication path as a failover path and to program the plurality of nodes to implement the failover path.

3. The system of claim 1, wherein the plurality of nodes comprises a plurality of data switches in a mesh configuration.

4. The system of claim 3, wherein the cost calculation subsystem is further configured to determine an independent cost for a plurality of independently programmable ports associated with one of the plurality of data switches.

5. The system of claim 1, wherein the routing subsystem is further configured to generate a plurality of communication flows to implement the primary communication path in a software-defined network.

6. The system of claim 1, wherein the path discovery subsystem discovers a plurality of potential paths between the source and the destination, and the cost calculation subsystem determines an associated cost of a plurality of potential paths based on each node in the potential path and maintains a current best cost.

7. The system of claim 6, wherein the path discovery subsystem further comprises an extension to constrain evaluation of the plurality of potential paths based on at least one criterion.

8. The system of claim 7, wherein the at least one criterion comprises one of a depth to search and a time to search.

9. The system of claim 7, wherein the path discovery subsystem returns to one of the plurality of nodes having a current best cost upon occurrence of the at least one criterion.

10. The system of claim 1, wherein the path discovery subsystem utilizes a multicast network discovery scheme to identify communication paths between the plurality of nodes.

11. The system of claim 1, wherein the system identifies the primary communication path and programs the plurality of nodes to implement the primary communication path without user intervention.

12. The system of claim 1, wherein the cost calculation subsystem is further configured to calculate an independent node cost for a plurality of port pairs, each port pair comprising an ingress port and an egress port.

13. The system of claim 1, wherein the path discovery subsystem is further configured to generating a plurality of potential failover paths based on nodes in the identified primary communication path.

14. The system of claim 13, wherein the path discovery subsystem is further configured to prune a subset of the potential failover paths that exceed an existing independent code cost for a known port pair.

15. A method for identifying a plurality of communication paths in a programmable communication network comprising a plurality of nodes and connecting a source and a destination, the method comprising:
discovering, using a path discovery subsystem, a first completed communication path in the programmable communication network between the source and the destination;
discovering, using the path discovery subsystem, a second completed communication path between the source and the destination;
calculating, using a cost calculation subsystem, a first cost for the first completed communication path between the source and the destination;
calculating, using the cost calculation subsystem, a second cost for the second completed communication path between the source and the destination;
identifying, using a routing subsystem, a primary communication path based on the first cost and the second cost; and
programming, using the routing subsystem, the plurality of nodes implement the primary communication path.

16. The method of claim 15, further comprising:
identifying, using the routing subsystem, the second completed communication path as a failover path; and
programming, using the routing subsystem, the plurality of nodes to implement the failover path.

17. The method of claim 15, wherein the plurality of nodes comprises a plurality of data switches in a mesh configuration.

18. The method of claim 17, further comprising determining, using the cost calculation subsystem, an independent cost for a plurality of independently programmable ports associated with one of the plurality of data switches.

19. The method of claim 15, further comprising generating, using the routing subsystem a plurality of communication flows to implement the primary communication path in a software-defined network.

20. The method of claim 15, further comprising:
discovering, using the path discovery subsystem, a plurality of potential paths between the source and the destination; and
determining, using the cost calculation subsystem, an associated cost of the plurality of potential paths based on each node in the potential path maintaining a current best cost.

21. The method of claim 20, further comprising constraining, using an extension of the path discovery subsystem, evaluation of the plurality of potential paths based on at least one criterion.

22. The method of claim 21, wherein the at least one criterion comprises a depth to search and a time to search.

23. The method of claim 21, further comprising returning, using the path discovery subsystem, to one of the plurality of nodes having a current best cost upon occurrence of the at least one criterion.

24. The method of claim 15, wherein the path discovery subsystem utilizes a multicast network discovery scheme to identify communication paths between the plurality of nodes.

25. The method of claim 15, wherein identifying the primary communication and programming the plurality of nodes to implement the primary communication path are completed without user intervention.

26. The method of claim 25, further comprising calculating, using cost calculation subsystem, an independent node cost for a plurality of port pairs, each port pair comprising an ingress port and an egress port.

27. The method of claim 23, further comprising generating, using the path discovery subsystem, a plurality of potential failover paths based on nodes in the identified primary communication path.

28. The method of claim 27, further comprising, pruning, using the path discovery subsystem, a subset of the potential failover paths that exceed an existing independent code cost for a known pair of ingress and egress ports.
